# EUROPÄISCHE PATENTSCHRIFT

(11) **EP 4 264 821 B1**
(45) Veröffentlichungstag und Bekanntmachung des Hinweises auf die Patenterteilung: **18.11.2026**
(21) Anmeldenummer: 21824366.5
(22) Anmeldetag: 02.12.2021
(51) Int. Cl.: H02P 27/08

(54) **VERFAHREN UND VORRICHTUNG ZUR ANSTEUERUNG EINES WECHSELRICHTERS**
METHOD AND APPARATUS FOR CONTROLLING AN INVERTER
PROCÉDÉ ET APPAREIL DE COMMANDE D'UN ONDULEUR

(30) Priorität: 15.12.2020 DE 102020215893
(43) Veröffentlichungstag der Anmeldung: 25.10.2023
(73) Patentinhaber: Robert Bosch GmbH, 70442 Stuttgart (DE)
(72) Erfinder: KLEINKNECHT, Marco, 74321 Bietigheim-Bissingen (DE); ZELTWANGER, Thomas, 74379 Ingersheim (DE)
(86) Internationale Anmeldenummer: PCT/EP2021/083970
(87) Internationale Veröffentlichungsnummer: WO 2022/128508

(56) Entgegenhaltungen:
- CN-B- 102 223 138
- CN-B- 105 656 337
- DE-A1- 102011 081 216
- DE-A1- 102016 211 858
- XIAO LIFAN ET AL: "Strategy and Implementation of Harmonic-Reduced Synchronized SVPWM for High-Power Traction Machine Drives", IEEE TRANSACTIONS ON POWER ELECTRONICS, INSTITUTE OF ELECTRICAL AND ELECTRONICS ENGINEERS, USA, vol. 35, no. 11, 8 April 2020 (2020-04-08), pages 12457 - 12471, XP011801374, ISSN: 0885-8993, [retrieved on 20200728], DOI: 10.1109/TPEL.2020.2986221

## Beschreibung

Die Erfindung betrifft ein Verfahren und eine Vorrichtung zur Ansteuerung eines Wechselrichters. Ferner betrifft die Erfindung einen Antriebsstrang mit einer entsprechenden Vorrichtung und ein Fahrzeug mit einem Antriebsstrang sowie ein Computerprogramm und ein maschinenlesbares Speichermedium.

### Stand der Technik

Die DE 10 2016 211858 A1 offenbart ein Verfahren zur Ansteuerung eines Wechselrichters zur Versorgung einer elektrischen Maschine, wobei die Schaltfrequenz der Pulsweitenmodulation ein Vielfaches der elektrischen Frequenz der elektrischen Maschine beträgt. Aus den Druckschriften CN 105 656 337 B, CN 102 223 138 B sind Verfahren und Vorrichtungen zur Ansteuerung eines Wechselrichters bekannt.

Aus der DE 10 2011 081 216 ist ein Verfahren zum Ansteuern einer elektrischen Drehstrommaschine bekannt, wobei die elektrische Drehstrommaschine mittels eines Wechselrichters mehrphasig bestromt wird. Der Wechselrichter wird in einem ersten Drehzahlbereich der Drehstrommaschine in einem ersten Ansteuerungsmodus angesteuert und in einem zweiten Drehzahlbereich in einem zweiten Ansteuerungsmodus. Vorteilhaft wird damit ein effizienter Betrieb in unterschiedlichen Drehzahlbereichen erreicht. Es besteht das Bedürfnis derartige Verfahren weiter zu verbessern und/oder alternative Verfahren zur weiteren Reduktion von Verlusten beim Betrieb elektrischer Maschinen bereitzustellen.

### Offenbarung der Erfindung

Mit dem unabhängigen Anspruch 1 wird ein Verfahren zur Ansteuerung eines Wechselrichters bereitgestellt. Der Wechselrichter wandelt, zur Versorgung einer elektrischen Maschine, eine Gleichspannung in eine mehrphasige Wechselspannung. Hierzu wird eine Pulsweitenmodulation eingesetzt. Bei der Pulsweitenmodulation (PWM) werden bevorzugt Schaltelemente des Wechselrichters mit unterschiedlichem Tastgrad mit einer, bevorzugt konstanten, Schaltfrequenz betätigt. Dabei wird jedes Schaltelement pro PWM-Periode (maximal) einmal ein- und ausgeschaltet. Die Schaltfrequenz entspricht dem Kehrwert der Peridodendauer der Pulsweitenmodulation. Ein derartiges PWM-Verfahren wird auch als ein Trägerfrequenzverfahren bezeichnet. Bei den Trägerfrequenzverfahren orientiert sich das Schaltmuster an einem festen Schalt- bzw. Rechenraster, also der Trägerfrequenz. Aufgrund der Betätigung der Schaltelemente wird eine Eingangsgleichspannung in eine mehrphasige Ausgangsspannung mit veränderlicher Amplitude, Phase und elektrischer Frequenz umgesetzt. Die elektrische Frequenz ist proportional zur Drehzahl der elektrischen Maschine. Die Schaltfrequenz ist sehr viel größer als die elektrische Frequenz, damit mittels der Betätigung der Schaltelemente eine sinusförmige Wechselspannung mit der elektrischen Frequenz generiert werden kann. Wird eine Pulsweitenmodulation mit fester Schaltfrequenz eingesetzt, so ist das Verhältnis von elektrischer Frequenz zur Schaltfrequenz nicht konstant, da sich die Drehzahl der elektrischen Maschine in einem PKW ständig ändert. Die beiden Frequenzen sind daher asynchron zueinander. Oftmals wird zur Laufzeit zwar die Schaltfrequenz geändert um bspw. Schaltverluste zu reduzieren, dabei wird sie aber nicht zwingend der elektrischen Drehzahl nachgeführt, womit weiterhin keine Synchronität vorliegt. Daher umfasst das Verfahren die Schritte: Ermitteln einer elektrischen Frequenz der elektrischen Maschine; Ermitteln einer Soll_Schaltfrequenz für eine Pulsweitenmodulation. Die Soll_Schaltfrequenz soll hierbei synchron zur elektrischen Frequenz der elektrischen Maschine sein. Das bedeutet, dass das Verhältnis oder der Quotient von Schaltfrequenz zu elektrischer Frequenz konstant und bevorzugt ganzzahlig ist. Bei einem derartigen winkelsynchronen Verfahren werden die Schaltelemente bevorzugt abhängig vom elektrischen Winkel einmal oder mehrmals pro elektrischer Periode ein- und ausgeschaltet. Bei winkelsynchronen Verfahren orientiert sich das Schaltmuster fest an der elektrischen Periode bzw. dessen Winkel. Durch das winkelsynchrone Schalten eignen sich diese Verfahren erst ab einer gewissen elektrischen Frequenz. Sie haben vor allem bei hohen elektrischen Frequenzen ihre Stärke. Die Spannungsausbeute ist mit der Variante Blockbetrieb (auch Blocktaktung, Blockkommutierung oder Grundfrequenztaktung und englisch Six-Step-Mode genannt) maximal. Subharmonische Frequenzen werden durch die Synchronität vermieden und die Schalthäufigkeit ist reduziert. Entsprechend stellen sich Systemvorteile wie ein hoher Wirkungsgrad des Leistungsmoduls, der elektrischen Maschine und somit des gesamten elektrischen Antriebs ein. Es wird ein maximaler Phasenstrom ermöglicht. Die Akustik, EMV und Spannungsripple und damit auch mechanische Belastungen werden minimiert. Andere winkelsynchrone Verfahren, wie die Dreifach Mittelpulstaktung, haben die Eigenschaft durch zusätzliche Synchrone Schaltvorgängen nicht nur die Winkellage zu verändern, sondern auch die resultierende Spannungszeigerlänge variabel zu stellen.

Weiter wird ein Soll_Startwinkels eines ersten Spannungszeigers der Pulsweitenmodulation in Bezug zur statorfesten alpha-Achse, oder einem der Grundspannungszeiger, in einem statorfesten alpha/ beta Koordinatensystem vorgegeben. Bei der Pulsweitenmodulation wird ein statorfestes alpha/ beta Koordinatensystem zur Darstellung der Raumzeiger des Spannungsverlaufs, der Spannungszeiger, verwendet. Die alpha-Achse zeigt in dem statorfesten alpha/ beta Koordinatensystem in die Richtung einer ersten Phasenspannung. Durch Vorgabe eines Soll_Startwinkels eines ersten Spannungszeigers der Pulsweitenmodulation in Bezug zur statorfesten alpha-Achse oder einem der Grundspannungszeiger, wird insbesondere die größte mögliche stellbare Spannungszeigerlänge und damit die größte stellbare mögliche Spannungsamplitude vorgegeben, die mittels der Pulsweitenmodulation bei gleichbleibender Eingangsspannung gestellt werden kann. Weiter umfasst das Verfahren den Schritt, dass der Wechselrichter mittels der Pulsweitenmodulation mit der ermittelten Soll_Schaltfrequenz und dem vorgegebenen Soll_Startwinkel angesteuert wird.

Vorteilhaft wird ein Verfahren bereitgestellt, welches eine Pulsweitenmodulation bereitstellt, die aufgrund ihrer Synchronität zur elektrischen Frequenz unter anderem eine gleichmäßige Drehmomentabgabe der elektrischen Maschine ermöglicht und aufgrund der Vorgabe des Startwinkels ein Einstellen einer variierbaren maximal stellbaren Spannung ermöglicht. Diese Eigenschaften sind vorteilhaft bevorzugt im Bereich der Übermodulation und/ oder für den Übergang aus einer Pulsweitenmodulation in den Blockbetrieb oder umgekehrt und im Blockbetrieb zur Verbesserung der Regelbarkeit einsetzbar und bewirken Systemvorteile. Vorteilhaft wird die Batteriespannung effizienter ausgenutzt, da ein längerer Spannungszeiger stellbar wird, somit mehr Spannung zur Verfügung steht, was zu einem niedrigeren Strom und damit zu weniger Verlusten führt. Die Synchronität der PWM-Verfahren wird vorteilhaft für einen sanften Übergang in den Block-Betrieb und währenddessen zur Regelung genutzt. Bevorzugt wird im Blockbetrieb der Spannungszeiger in Abhängigkeit von Sollwertänderungen und Störungen eingestellt, also verlängert oder verkürzt. Bevorzugt ist der Implementierungsaufwand und Wartungsaufwand gegenüber höheren Verfahren der Synchronen Taktung geringer. Bevorzugt können auch andere PWM-Modulationsverfahren wie SVPWM, Flat-Top durch alleiniges Nachführen der Schaltfrequenz in einem geeigneten konstanten Verhältnis optimiert werden. Verlustreiche (Stabilitäts-) Effekte in der Übermodulation (oder auch bei geringeren Aussteuerungen) werden somit umgangen. Gleichzeitig wird eine höhere Übermodulation bei gleichen oder sogar geringeren Verlusten ermöglicht. Bereits bei einer niedrigeren elektrischen Frequenz werden die Vorteile der Synchronität nutzbar. Aufgrund der Nutzbarkeit bereits bei niedrigeren Frequenzen als für den Blockbetrieb üblich, ist eine höhere Verfügbarkeit für Betriebspunkte mit synchronen Verfahren bereitgestellt. Bevorzugt erfolgt das Einstellen des Verhältnis von elektrischer Frequenz zur Soll_Schaltfrequenz und des Soll_Startwinkel durch eine Steuerung oder Regelung oder gemischt (Vorsteuerung und Regelung).

In einer anderen Ausgestaltung der Erfindung, wird zur Ermittlung der synchronen Soll_Schaltfrequenz der Pulsweitenmodulation zur elektrischen Frequenz der elektrischen Maschine die elektrische Frequenz mit einer ganzzahligen vorgebbaren Schaltzahl multipliziert.

Zur Ermittlung der Soll-Schaltfrequenz, die synchron zur elektrischen Frequenz der elektrischen Maschine sein soll, wird die elektrische Frequenz mit einer ganzzahligen vorgebbaren Schaltzahl multipliziert. Die vorgebbare Schaltzahl beträgt bevorzugt bei dreiphasigen elektrischen Antriebssystemen 6 und deren Vielfache (6, 12, 18, 24...).

Vorteilhaft wird ein Verfahren zur Ermittlung einer synchronen Soll_Schaltfrequenz der Pulsweitenmodulation zur elektrischen Frequenz bereitgestellt. Auf Grund der Topologie des Wechselrichters, beispielsweise 3-phasig mit einer B6-Brücke) sind nicht alle Schaltzahlen für die Übermodulation geeignet. Bei ungeeigneten Schaltzahlen, bspw. 7 bei einem 3 phasigen System, werden die Spannungszeiger in der Übermodulation unterschiedlich stark gekürzt, was zu Gleichanteilen und subharmonischen Schwingungen in den Phasenspannungen führt. Diese führen zum einen zu erheblichen Verlusten, Komforteinbußen (Drehmomentschwankungen), Signalschwingungen (schwierige Istwert-Erfassung), einer schlechteren Regelgüte und zum anderen dazu, dass die Übermodulation nur begrenzt ausgenutzt und nicht als Verfahren für den Übergang zwischen PWM-Verfahren und Blockbetrieb genutzt werden kann. Diese Nachteile werden umso größer, umso kleiner die Schaltzahl ist. Bei einem asynchronen PWM-Verfahren, bei welchem sich die Schaltzahl kontinuierlich ändert, fährt man zwangsweise auch durch ungeeignete Schaltverhältnisse hindurch. Daher wird die maximal mögliche Übermodulation oft global begrenzt, obwohl dieses Problem nur bei einzelnen Schaltzahlen auftritt. Bevorzugt wird das zusätzliche Potential der Übermodulation durch Synchronisierung und geeignete Schaltzahlen genutzt (bspw. 6, 8, 9, 10, 12, 14, 15, 16, 18, 21, ...), bei welchen diese Phänomene prinzipbedingt nicht auftreten. Bevorzugt ist es oftmals sinnvoll die Schaltfrequenz zu verringern, um die entstehenden Verluste in einzelnen Bauteilen zu verringern. Eine geringere Schaltfrequenz führt dazu, dass man auch bei niedrigen bis mittleren Drehzahlen bereits kleine Schaltzahlen (q<20) erhält und diese sich wiederum aufgrund der angesprochenen Nachteile beim Durchfahren von ungeeigneten Schaltzahlen negativ auf andere Bauteile auswirken. Bevorzugt verhindert die Synchronisierung, dass diese Nachteile auftreten und ermöglicht so ein verlustfreieres und /oder weiteres Absenken der Schaltfrequenz.

Da in der Feldschwächung die Spannung maximal ist, bewirkt bevorzugt ein Erhöhen der maximal möglichen Spannung durch mehr Übermodulation geringere Ströme, wodurch weniger Verluste entstehen und die Effizienz gesteigert wird.

Bei der Nutzung für den Übergang zum Blockbetrieb bieten bestimmte Schaltzahlen bevorzugt die Möglichkeit eines sanften Übergangs. Die Pulsform mit immer kleiner werdenden Nullzeigern (Pulse) / größerer Aussteuerung entspricht immer mehr dem Stromverlauf bei dem Blockbetrieb. Der Blockbetrieb ist vorteilhaft, wenn u.a. eine ausreichend hohe elektrische Frequenz vorliegt und/oder wenn eine ausreichende Mindest-Soll-Spannungszeigerlänge/Modulationsindex (also nahe oder in der Feldschwächung) vorliegt. Liegen die notwendigen Kriterien vor, wird bevorzugt der Übergang in den Blockbetrieb aktiviert. Sind die Kriterien nicht mehr vorhanden, wird ein Übergang vom Blockbetrieb in das PWM-Verfahren aktiviert. Der Übergang beschreibt also beide Richtungen. Für einen möglichst stetigen Übergang werden bevorzugt geeignete Schaltzahlen vorgegeben (bspw. 6, 8, 9, 10, 12, 14, 15, 16, 18, 21, ...). Dann lässt sich bevorzugt die Spannungszeigerlänge bzw. der Modulationsindex flexibel einstellen. Beim Übergang in den Blockbetrieb wird bevorzugt eine Schaltzahl eingestellt mit einer maximalen Spannungszeigerlängengrenze die der maximalen Spannungszeigerlängengrenze der vorhergegangenen Schaltzahl entspricht. Zeitlich, oder abhängig von einem anderen oder weiteren Systemzustand wird bevorzugt die maximale stellbare Spannungszeigerlänge verändert bis sie die des Blockbetriebs erreicht. Dazu werden bevorzugt die Spannungspulse bis zur Mindestpulsbreite verkleinert bis das Schaltmuster exakt dem des Blockbetriebs entspricht. Dabei werden bevorzugt die Pulse beim Unterschreiten der Mindestpulsbreite gar nicht geschaltet. Sobald die maximale Spannungszeigerlängengrenze der Grenze des Blockbetriebs entspricht ist der Übergang beendet und es wird bevorzugt in den Blockbetrieb gewechselt. Der Vorgang vom Blockbetrieb in eine Pulsweitenmodulation erfolgt bevorzugt entsprechend umgekehrt. Ändert sich während des Übergangs die Entscheidung gegen das Ziel-Modulationsverfahren (PWM-Verfahren oder Blockbetrieb), dann wird bevorzugt der Übergang wieder umgekehrt. In den Blockbetrieb wird bevorzugt bei maximaler Aussteuerung des synchronen SVPWM-Verfahrens gewechselt. Muss der Regler während des Wechselvorgangs seine Spannungszeigerlänge wegen einer Störung oder einer Sollwertänderung kürzen, muss dies bevorzugt weiterhin möglich sein, um das Regelverhalten nicht einzuschränken. Dieses Kürzen kann bevorzugt auch mit einem synchronisierten SVPWM-Verfahren geschehen.

Erfindungsgemäß wird der Soll_Startwinkel eines ersten Spannungszeigers in Bezug zur statorfesten alpha-Achse, oder einem der Grundspannungszeiger, in Abhängigkeit von Betriebspunktvorgaben vorgegeben und beträgt insbesondere 0° oder 30°.

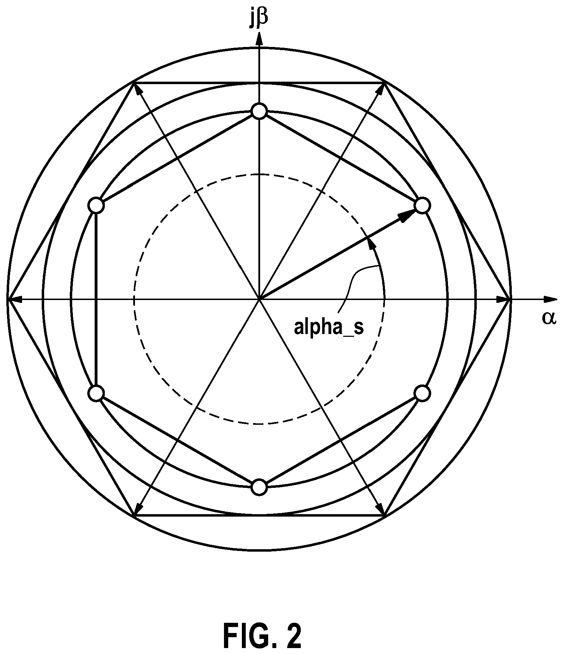

Der Soll_Startwinkel wird in Abhängigkeit von Betriebspunktvorgaben vorgegeben. Aus dem statorfesten alpha-/ beta Koordinatensystem ist ersichtlich, dass je nach Wahl des Soll-Startwinkels mit der Pulsweitenmodulation unterschiedliche maximale Spannungen gestellt werden können. Je nach vorliegenden Betriebspunktvorgaben, beispielsweise beim Erhöhen der Drehzahl der elektrischen Maschine, welche einen Übergang aus der Pulsweitenmodulation in die Blockkommutierung erfordert, werden Soll_Startwinkel gewählt, die das Einstellen einer jeweils notwendigen maximalen Spannungen ermöglichen. Soll_Startwinkel für minimal stellbare Spannungen ergeben sich bei dreiphasigen elektrischen Antriebssystemen bei 360°/(2*q). Für den Einsatz bei dreiphasigen Systemen und q=6 beträgt folglich hierbei bevorzugt ein Startwinkel 30°. Wie bspw. aus der Figur 2 zu entnehmen, ergeben sich bevorzugt vergleichbare Wirkungen bei q=6 entsprechend bei Startwinkeln von 90°, 150°, 210° oder 270°, also im Abstand von 360°/q vom ermittelten Startwinkel. Soll_Startwinkel für maximal stellbare Spannungen ergeben sich bei elektrischen Antriebssystemen unabhängig von der Anzahl der Phasen bei Soll_Startwinkeln von 0° in Bezug zur statorfesten alpha-Achse oder einem der Grundspannungszeiger. Vergleichbare Wirkungen bei q=6 ergeben sich wie oben gezeigt bevorzugt für Startwinkel im Abstand von 360°/q bei Startwinkeln von 60°, 120°, 180° oder 240°.

Vorteilhaft wird ein Verfahren zur Vorgabe eines Soll_Startwinkels eines ersten Spannungszeigers für die Pulsweitenmodulation bereitgestellt.

In einer anderen Ausgestaltung der Erfindung, wird das Verfahren zum Ansteuern der elektrischen Maschine ausgeführt, wenn der Betrag der ermittelten elektrischen Frequenz der elektrischen Maschine größer als ein erster vorgebbarer Grenzwert und/ oder kleiner als ein zweiter vorgebbarer Grenzwert ist.

Wenn der Betrag der ermittelten elektrischen Frequenz der elektrischen Maschine größer als ein erster vorgebbarer Grenzwert und/ oder kleiner als ein zweiter vorgebbarer Grenzwert ist befindet sich die elektrische Maschine in einem Drehzahlbereich, innerhalb dem eine synchrone Pulsweitenmodulation möglich ist, also eine Pulsweitenmodulation, deren Schaltfrequenz synchron zur elektrischen Frequenz der elektrischen Maschine ist. Dies ist möglich, da die elektrische Frequenz deutlich größer Null ist. Darüber hinaus befindet sich die elektrische Maschine in einem Drehzahlbereich, in dem noch die Pulsweitenmodulation ausgeführt werden kann, da die Drehzahl noch nicht zu nahe der Schaltfrequenz ist.

Vorteilhaft wird ein Verfahren bereitgestellt, welches einen effektiven Einsatz der synchronen Pulsweitenmodulation ermöglicht.

In einer anderen Ausgestaltung der Erfindung wird das Verfahren zur Ansteuerung eines Wechselrichters im Betriebspunkt der Übermodulation ausgeführt.

Vorteilhaft wird ein Verfahren für die Ansteuerung eines Wechselrichters im Betriebs der Übermodulation bereitgestellt. Vorteilhaft wird mittels dieses Verfahrens eine Drehmomentschwingung im Betriebspunkt der Übermodulation minimiert und ein Drehmomentsprung während des Übergangs von einer Pulsweitenmodulation zu einer Blockkommutierung minimiert, indem die stellbare Spannung mit Annäherung an den Übergang von der Pulsweitenmodulation zu der Blockkommutierung maximiert wird.

In einer anderen Ausgestaltung der Erfindung wird zur Ansteuerung eines Wechselrichters eine pulsweitenmodulierte Raumzeigermodulation mit einer vorgebbaren Schaltfrequenz ausgeführt, wenn der Betrag der ermittelten elektrischen Frequenz der elektrischen Maschine kleiner als der erste vorgebbare Grenzwert ist, wobei die vorgebbare Schaltfrequenz insbesondere, zumindest teilweise, asynchron zur elektrischen Frequenz ist.

Wenn der Betrag der ermittelten elektrischen Frequenz der elektrischen Maschine kleiner als der erste vorgebbare Grenzwert ist, sieht das Verfahren vor, den Wechselrichter mittels einer Pulsweitenmodulation mit einer vorgebbaren Schaltfrequenz anzusteuern. Dabei befindet sich die elektrische Maschine bevorzugt in einem sehr geringen Drehzahlbereich der elektrischen Maschine, in dem eine synchrone Pulsweitenmodulation nicht möglich ist. Daher wird der Wechselrichter in diesem Drehzahlbereich mittels einer asynchronen Pulsweitenmodulation angesteuert.

Vorteilhaft wird ein Verfahren für die Ansteuerung eines Wechselrichters bei niedrigen Drehzahlen bereitgestellt.

In einer anderen Ausgestaltung der Erfindung wird zur Ansteuerung eines Wechselrichters eine zur elektrischen Frequenz synchrone Blockkommutierung, ausgeführt, wenn der Betrag der ermittelten elektrischen Frequenz der elektrischen Maschine größer als der zweite vorgebbare Grenzwert ist.

Wenn der Betrag der ermittelten elektrischen Frequenz der elektrischen Maschine größer als der zweite vorgebbare Grenzwert ist, sieht das Verfahren vor, den Wechselrichter mittels einer zur elektrischen Frequenz synchronen Modulation, insbesondere einer Blockkommutierung, anzusteuern. Dabei befindet sich die elektrische Maschine bevorzugt in einem sehr hohen Drehzahlbereich der elektrischen Maschine, in dem eine Pulsweitenmodulation nicht mehr optimal oder möglich ist, da die elektrische Frequenz zu nahe der Schaltfrequenz ist. Daher wird der Wechselrichter in diesem Drehzahlbereich mittels einer synchronen Pulsweitenmodulation angesteuert.

Vorteilhaft wird ein Verfahren für die Ansteuerung eines Wechselrichters bei hohen Drehzahlen bereitgestellt.

Ferner betrifft die Erfindung ein Computerprogramm, umfassend Befehle, die bei der Ausführung des Programms durch einen Computer diesen veranlassen, das bisher beschriebene Verfahren auszuführen.

Ferner betrifft die Erfindung ein maschinenlesbares Speichermedium, umfassend Befehle, die bei der Ausführung durch einen Computer diesen veranlassen, das bisher beschriebene Verfahren auszuführen.

Ferner betrifft die Erfindung eine Vorrichtung gemäß Anspruch 7.

Es wird eine Vorrichtung zur Ansteuerung eines Wechselrichters bereitgestellt.

Die Vorrichtung umfasst einen Stromregelkreis mit einer Spannungsmodulation. Ein Stromregelkreis dient der Regelung des Stroms durch eine elektrische Maschine. Die Spannungsmodulation dient der Umwandlung der Wandlung der Eingangsgleichspannung in eine Ausgangswechselspannung des Wechselrichters, die schließlich in einer angeschlossenen elektrischen Maschine den Strom durch die elektrische Maschine ausbildet. Die Vorrichtung umfasst weiter einen Steuer- oder Regelkreis. Dieser dient der Ermittlung und Vorgabe der Soll_Schaltfrequenz synchron zur elektrischen Frequenz. Weiter ist die Vorrichtung dazu eingerichtet, das bisher beschriebene Verfahren auszuführen.

Vorteilhaft wird eine Vorrichtung bereitgestellt, die eine Pulsweitenmodulation ausführt, die aufgrund ihrer Synchronität zur elektrischen Frequenz unter anderem eine gleichmäßige Drehmomentabgabe der elektrischen Maschine ermöglicht und aufgrund der Vorgabe des Startwinkels ein Einstellen einer variierbaren maximal stellbaren Spannung ermöglicht.

Ferner betrifft die Erfindung einen Antriebsstrang mit einer Vorrichtung zur Ansteuerung eines Wechselrichters und insbesondere mit einer Leistungselektronik und/ oder einem elektrischen Antrieb. Ein derartiger Antriebsstrang dient beispielsweise dem Antrieb eines elektrischen Fahrzeugs. Mittels des Verfahrens und der Vorrichtung wird ein effizienter Betrieb des Antriebstrangs ermöglicht.

Ferner betrifft die Erfindung ein Fahrzeug, mit einem beschriebenen Antriebsstrang. Vorteilhaft wird somit ein Fahrzeug bereitgestellt, welches eine Vorrichtung umfasst, zur Ansteuerung eines Wechselrichters.

Es versteht sich, dass die Merkmale, Eigenschaften und Vorteile des erfindungsgemäßen Verfahrens entsprechend auf die Vorrichtung bzw. den Antriebsstrang und das Fahrzeug und umgekehrt zutreffen bzw. anwendbar sind.

Das Verfahren und die Vorrichtung kann bevorzugt auch für weitere Antriebslösungen, Maschinen und Wechselrichter mit unterschiedlichen Phasenanzahlen verwendet werden. Bevorzugt ist die Grenze der maximalen Spannungszeigerlänge stetig, der Verlauf kann dabei beliebig sein, bevorzugt gleichmäßig. Bevorzugt wird statt des Blockbetriebes ein anderes winkelsynchrones Modulationsverfahren angesteuert.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnung

Im Folgenden soll die Erfindung anhand einiger Figuren näher erläutert werden, dazu zeigen:
Figur 1 zeigt beispielhaft ein alpha/ beta Korrdinatensystem mit eingezeichneten Grundspannungszeigern
Figur 2 zeigt beispielhaft ein alpha/ beta Korrdinatensystem mit eingezeichneten Spannungszeigern einer synchronisierten Pulsweitenmodulation
Figur 3 eine schematische Darstellung einer Steuerung zur Ermittlung und Vorgabe einer Soll_Schaltfrequenz
Figur 4 eine schematische Darstellung eines Regelkreises zur Regelung eines Startwinkels
Figur 5 eine schematische Darstellung eines Stromregelkreises mit einer elektrischen Maschine
Figur 6 ein schematisch dargestelltes Fahrzeug mit einem Antriebsstrang,
Figur 7 ein schematisch dargestelltes Ablaufdiagramm für ein Verfahren zur Ansteuerung eines Wechselrichters.

### Ausführungsformen der Erfindung

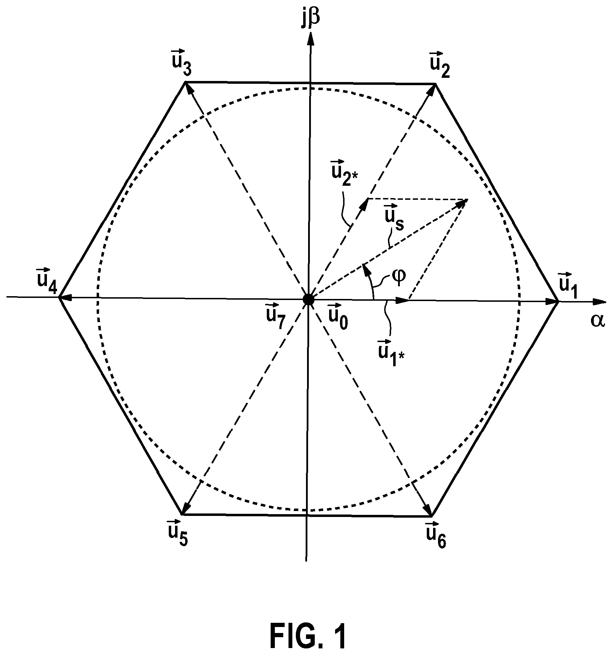

Die Figur 1 zeigt beispielhaft ein alpha/ beta Korrdinatensystem mit eingezeichneten Grundspannungszeigern u_0 bis u_7 und einem beispielsweise stellbaren Spannungszeiger u_s. Diese Darstellung bezieht sich auf eine Raumzeigermodulation, auch SVPWM (engl. space vector pulse width modulation) genannt. Diese Darstellung ist beispielhaft für ein dreiphasiges System. Zwischen den Grundspannugszeigern u_1 bis u6 ergibt sich folglich jeweils ein Winkel von 60°. Bei dieser Modulation kann im zeitlichen Mittel jeder Spannungszeiger (bspw. u_s), ein modulierter (Soll-)Spannungszeiger aus seinen Grundspannungszeigeranteilen, innerhalb des Hexagons eingestellt gestellt werden. Durch aufeinanderfolgende Spannungszeiger auf einer Kreisbahn lässt sich dadurch bspw. ein sinusförmiges Signal erstellen, bevorzugt zur Bestromung einer elektrischen Maschine. Der eingezeichnete Innenkreis des Hexagons steht für die größtmögliche stellbare sinusförmige Phasenspannung. Vergrößert man den Kreis und limitiert ihn überall dort, wo er über das Hexagon hinausragen würde, wird die Spannung übermoduliert. Die Modulation befindet sich im Betriebspunkt der Übermodulation. In diesem Bereich lässt sich kein idealer Sinus abbilden.

Figur 2 zeigt beispielhaft für ein dreiphasiges System ein alpha/ beta Korrdinatensystem mit sechs eingezeichneten Spannungszeigern (mit den Punkten dargestellt) einer synchronisierten Pulsweitenmodulation. Die Pulsweitenmodulation ist synchronisiert, da die Schaltfrequenz so gewählt wird, dass sie einem ganzzahligen Vielfachen der elektrischen Frequenz entspricht. Beispielhaft ist als ganzzahliges Vielfaches die Schaltzahl q=6 dargestellt, weshalb innerhalb einer elektrischen Periode von 360° genau sechs Schaltfrequenzperioden Platz finden, die sich über jeweils 60° der elektrischen Periode erstrecken. In Abhängigkeit dessen, welcher Soll_Startwinkel alpha_s eines ersten Spannungszeigers der Pulsweitenmodulation in Bezug zur statorfesten alpha-Achse, oder einem der Grundspannungszeigern, gewählt wird, ergibt sich eine unterschiedlich große maximal stellbare Spannung, da diese mit der maximal darstellbaren Spannungszeigerlänge innerhalb des Hexagons korreliert. Aus der Darstellung lässt sich die Schaltzahl q = 6 ablesen, die angibt, wie viele Spannungszeiger pro elektrischer Umdrehung oder Periode gestellt werden. Darüberhinaus ist der Startwinkel alpha_s ablesbar, der angibt, welchen Winkel der erste Spannungszeiger bezogen auf die alpha-Achse hat. Auf Grund der Topologie des Wechselrichters (hier: 3-phasig, B6-Topologie) sind nicht alle Schaltzahlen für die Übermodulation geeignet. Bei ungeeigneten Schaltzahlen werden die Spannungszeiger in der Übermodulation unterschiedlich stark gekürzt, was zu Gleichanteilen und subharmonischen Schwingungen in den Phasenspannungen führt. Diese führen zum einen zu erheblichen Verlusten, Komforteinbußen (Drehmomentschwankungen), Signalschwingungen, die mit einer schwierigen Istwert-Erfassung verbunden sind, einer schlechteren Regelgüte und zum anderen dazu, dass die Übermodulation nur begrenzt ausgenutzt und nicht als Transitverfahren zwischen dem Pulsweitenmodulationsverfahren und dem Blockbetrieb oder Blockkommutierung genutzt werden kann. Diese Nachteile werden umso größer, umso kleiner die Schaltzahl ist. Bei einem asynchronen PWM-Verfahren, bei welchem sich die Schaltzahl kontinuierlich ändert, fährt man zwangsweise auch durch ungeeignete Schaltverhältnisse hindurch. Daher wird die maximal mögliche Übermodulation bevorzugt oft global begrenzt, obwohl dieses Problem nur bei einzelnen Schaltzahlen auftritt.

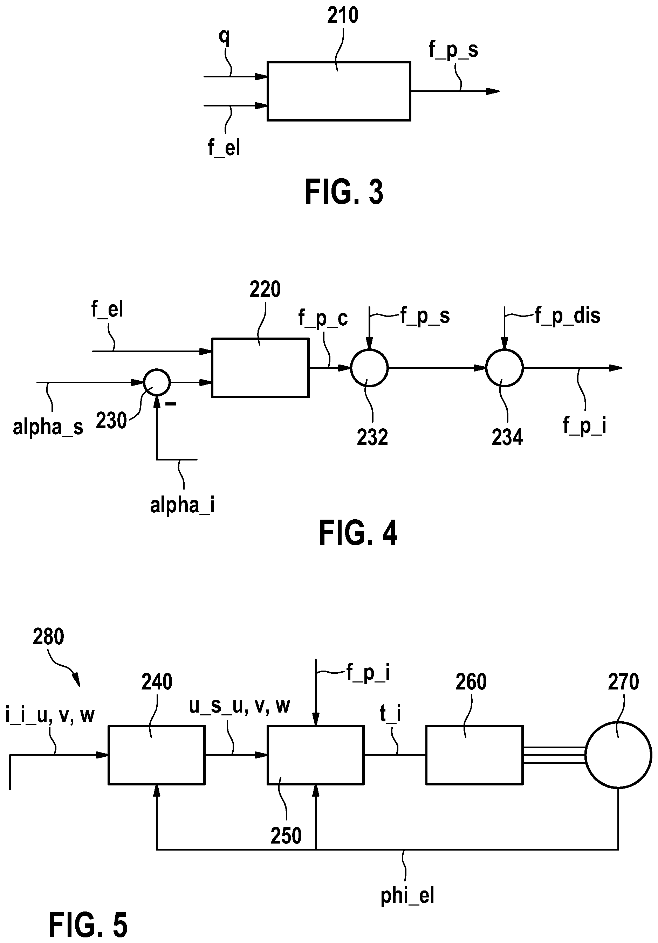

Figur 3 zeigt eine schematische Darstellung einer Steuerung 210 zur Ermittlung und Vorgabe einer Soll_Schaltfrequenz f_p_s. Mittels der Steuerung 210 wird die Soll_Schaltfrequenz f_p_s als Produkt der vorgebaren Schaltzahl q und der elektrischen Frequenz f_el ermittelt und ausgegeben.

Figur 4 zeigt eine schematische Darstellung eines Regelkreises zur Regelung eines Startwinkels. Hierzu wird die Regeldifferenz aus Soll-Startwinkel alpha_s und dem Ist_Startwinkel alpha_i einem Regler 220 zugeführt. In Abhängigkeit der Regeldifferenz und der elektrischen Frequenz f_el ermittelt der Regler 220 eine optimierte Schaltfrequenz f_p_c. In einem ersten Knotenpunkt 232 wird diese mit der Soll-Schaltfrequenz f_p_s bevorzugt zusammengeführt wobei diese noch durch Störungen der Schaltfrequenz f_p_dis in Knotenpunkt 234 bevorzugt überlagert werden können, sodass sich eine Ist_Schaltfrequenz f_p_i ergibt, welche anschließend einer Regelstrecke zugeführt wird. Bevorzugt ist diese Regelstrecke eine Stromregelung für die elektrische Maschine.

Figur 5 zeigt eine schematische Darstellung eines Stromregelkreises 280 mit einer elektrischen Maschine 270. Der Stromregelkreis 280 umfasst weiter bevorzugt den Stromregler 240, eine Spannungsmodulation 250 und einen Wechselrichter 260. In Abhängigkeit der Regeldifferenz aus Soll_Strom und dem Ist_Strom i_i_u,v,w sowie der elektrischen Freqenz f_el der elektrischen Maschine (oder der entsprechenden Drehzahl der elektrischen Maschine) ermittelt der Stromregler 240 eine Soll_Spannnung u_s_u,v,w für die einzelnen Phasen. In Abhängigkeit der Soll_Spannung u_s_u,v,w und der elektrischen Frequenz der elektrischen Maschine ermittelt die Spannugsmodulation 250 bevorzugt mit der Ist_Schaltfrequenz f_p_i die Schaltzeiten t_i zur Ansteuerung der Schaltelemente im Wechselrichter 260. Aufgrund der Ansteuerung der Schaltelemente ergeben sich entsprechende Spannungsverläufe in den einzelnen Phasen der elektrischen Maschine 270. Bevorzugt kann das Einstellen der Schaltzahl und des Startwinkels allein durch Beeinflussung der Ist_Schaltfrequenz f_p_i und Verwendung von existierenden Algorithmen, wie SVPWM, Flattop usw., umgesetzt werden. Hierfür wird bevorzugt im bestehenden Stromregelkreis 280, in den auch die Spannungsmodulation 250 einbettet ist, mittels eines zusätzlichen Steuer- oder Regelkreises 220 und/oder der Steuerung 210 die Ist_Schaltfrequenz f_p_i vorgegeben. Der zusätzliche Steuer- oder Regelkreis 220 und/oder die Steuerung 210 berechnet diese Ist_Schaltfrequenz f_p_i in Abhängigkeit der aktuellen elektrischen Frequenz f_el und der Schaltzahl q sowie dem gesteuerten/geregelten Wert, bevorzugt die optimierte Schaltfrequenz f_p_c oder ein Korrekturanteil der Schaltfrequenz, um die gewünschte Winkellage der Soll_Startwinkel alpha_s der Spannungszeiger zu erhalten. Die Funktion zum Stellen der Schaltzahl und des Startwinkels ist bevorzugt entweder geregelt oder gesteuert oder eine Mischung aus Steuerung und Regelung, je nach Anforderungen im stationären Betrieb wie auch bei Sollgrößenänderungen.

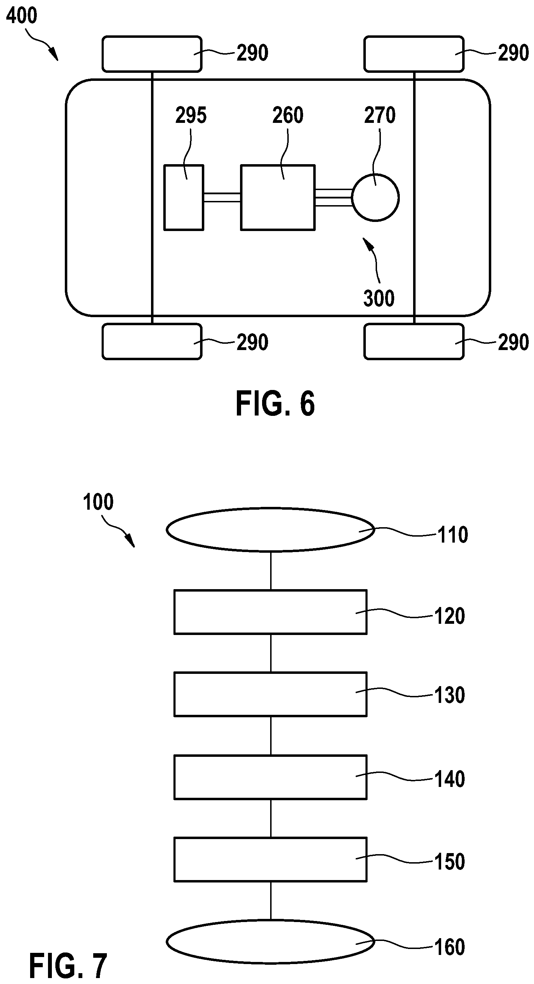

Figur 6 zeigt ein schematisch dargestelltes Fahrzeug 400 mit einem Antriebsstrang 300. Die Darstellung zeigt beispielhaft ein Fahrzeug 400 mit vier Rädern 290, wobei die Erfindung gleichermaßen in beliebigen Fahrzeugen mit einer beliebigen Anzahl an Rädern zu Lande, zu Wasser und in der Luft einsetzbar ist. Der Antriebsstrang 300 umfasst neben der Vorrichtung 200 zur Ansteuerung des Wechselrichters 260 insbesondere eine Traktionsbatterie 295 zur Versorgung des elektrischen Antriebsstrangs 300 mit elektrischer Energie, einen Wechselrichter 260 und/ oder die elektrische Maschine 270.

Die Figur 7 zeigt einen schematischen Ablauf eines Verfahren 100 zur Ansteuerung eines Wechselrichters 260. Mit dem Schritt 110 beginnt das Verfahren. In Schritt 120 wird eine elektrische Frequenz f_el der elektrischen Maschine 270 ermittelt. Mit Schritt 130 wird eine Soll_Schaltfrequenz f_p_s für eine Pulsweitenmodulation ermittelt, wobei die Soll_Schaltfrequenz f_p_s synchron zur ermittelten elektrischen Frequenz f_el der elektrischen Maschine ist. In Schritt 140 wird ein Soll_Startwinkels alpha_s eines ersten Spannungszeigers der Pulsweitenmodulation in Bezug zur statorfesten alpha-Achse, oder einem der Grundspannungszeiger, vorgegeben. In Schritt 150 wird der Wechselrichter 260 mittels Pulsweitenmodulation mit der ermittelten Soll_Schaltfrequenz f_p_s und dem vorgegebenen Soll_Startwinkel alpha_s betrieben. Mit Schritt 160 endet das Verfahren.

## Patentansprüche

1. Verfahren (100) zur Ansteuerung eines Wechselrichters (260),
wobei der Wechselrichter (260), zur Versorgung einer elektrischen Maschine (270), eine Gleichspannung in eine mehrphasige Wechselspannung wandelt, mit den Schritten:
Ermitteln (120) einer elektrischen Frequenz (f_el) der elektrischen Maschine (270);
Ermitteln (130) einer Soll_Schaltfrequenz (f_p_s) für eine Pulsweitenmodulation, wobei die Soll_Schaltfrequenz (f_p_s) synchron zur ermittelten elektrischen Frequenz (f_el) der elektrischen Maschine ist;
Ansteuern (150) des Wechselrichters (260) mittels Pulsweitenmodulation mit der ermittelten Soll_Schaltfrequenz (f_p_s)
**gekennzeichnet durch** die folgenden zusätzlichen Schritte bei einem Übergang aus einer Pulsweitenmodulation in eine Blockkommutierung oder umgekehrt:
Vorgeben (140) eines Soll_Startwinkels (alpha_s) eines ersten Spannungszeigers der Pulsweitenmodulation in Bezug zur statorfesten alpha-Achse, oder in Bezug zu einem der Grundspannungszeiger,
wobei der Soll_Startwinkels (alpha_s) in Abhängigkeit von Betriebspunktvorgaben vorgegeben wird und insbesondere 0° oder 30° beträgt, und
Ansteuern (150) des Wechselrichters (260) mittels Pulsweitenmodulation mit der ermittelten Soll_Schaltfrequenz (f_p_s) und dem vorgegebenen Soll_Startwinkel (alpha_s).

2. Verfahren (100) nach Anspruch 1,
wobei zur Ermittlung der synchronen Soll_Schaltfrequenz (f_p_s) der Pulsweitenmodulation zur elektrischen Frequenz (f_el) der elektrischen Maschine (270) die elektrische Frequenz (f_el) mit einer ganzzahligen vorgebbaren Schaltzahl (q) multipliziert wird.

3. Verfahren (100) nach einem der vorherigen Ansprüche,
wobei das Verfahren (100) zum Ansteuern der elektrischen Maschine (270) ausgeführt wird, wenn der Betrag der ermittelten elektrischen Frequenz (f_el) der elektrischen Maschine (270) größer als ein erster vorgebbarer Grenzwert (f_1) und/ oder wobei das Verfahren (100) zum Ansteuern der elektrischen Maschine (270) ausgeführt wird, wenn der Betrag der ermittelten elektrischen Frequenz (f_el) der elektrischen Maschine (270) kleiner als ein zweiter vorgebbarer Grenzwert (f_2) ist.

4. Verfahren nach Anspruch 3, wobei das Verfahren (100) zur Ansteuerung eines Wechselrichters (260) im Betriebspunkt der Übermodulation ausgeführt wird.

5. Verfahren (100) nach Anspruch 3,
wobei zur Ansteuerung eines Wechselrichters (260) eine pulsweitenmodulierte Raumzeigermodulation mit einer vorgebbaren Schaltfrequenz (f_v) ausgeführt wird, wenn der Betrag der ermittelten elektrischen Frequenz (f_el) der elektrischen Maschine (270) kleiner als der erste vorgebbarer Grenzwert (f_1) ist, wobei die vorgebbare Schaltfrequenz (f_v) insbesondere, zumindest teilweise, asynchron zur elektrischen Frequenz (f_el) ist.

6. Verfahren (100) nach Anspruch 3,
wobei zur Ansteuerung eines Wechselrichters (260) die zur elektrischen Frequenz synchrone Blockkommutierung, ausgeführt wird, wenn der Betrag der ermittelten elektrischen Frequenz (f_el) der elektrischen Maschine (270) größer als der zweite vorgebbare Grenzwert (f_2) ist.

7. Vorrichtung (200) zur Ansteuerung eines Wechselrichters (260),
wobei die Vorrichtung einen Stromregelkreis (280) mit einer Spannungsmodulation (250) umfasst
**dadurch gekennzeichnet, dass** die Vorrichtung
einen ersten Steuer- oder Regelkreis (210) umfasst zur Ermittlung und Vorgabe der Soll_Schaltfrequenz (f_p_s) synchron zur elektrischen Frequenz (f_el),
und dazu eingerichtet ist ein Verfahren nach einem der Ansprüche 1 bis 6 auszuführen.

8. Antriebsstrang (300) mit einer Vorrichtung (200) gemäß Anspruch 7.

9. Fahrzeug (400) mit einem Antriebsstrang (300) nach Anspruch 8.

10. Computerprogramm, umfassend Befehle, die bei der Ausführung des Programms durch einen Computer die Vorrichtung (200) nach Anspruch 7 veranlassen, das Verfahren (100) nach Anspruch 1 bis 6 auszuführen.

11. Computerlesbares Speichermedium, umfassend Befehle, die bei der Ausführung durch einen Computer die Vorrichtung (200) nach Anspruch 7 veranlassen, das Verfahren (100) nach Anspruch 1 bis 6 auszuführen.

## Claims

1. Method (100) for controlling an inverter (260),
wherein the inverter (260) converts a DC voltage into a multiphase AC voltage in order to supply power to an electric machine (270), having the steps of:
ascertaining (120) an electrical frequency (f_el) of the electric machine (270);
ascertaining (130) a setpoint switching frequency (f_p_s) for a pulse-width modulation,
wherein the setpoint switching frequency (f_p_s) is synchronous with the ascertained electrical frequency (f_el) of the electric machine;
controlling (150) the inverter (260) by means of pulse-width modulation with the ascertained setpoint switching frequency (f_p_s),
**characterized by** the following additional steps in the case of a transition from a pulse-width modulation to a block commutation or vice versa:
specifying (140) a setpoint start angle (alpha_s) of a first voltage vector of the pulse-width modulation in relation to the stator-fixed alpha axis, or in relation to one of the base voltage vectors,
wherein the setpoint start angle (alpha_s) is specified on the basis of operating point specifications and is in particular 0° or 30°, and
controlling (150) the inverter (260) by means of pulse-width modulation with the ascertained setpoint switching frequency (f_p_s) and the specified setpoint start angle (alpha_s).

2. Method (100) according to Claim 1,
wherein, in order to ascertain the synchronous setpoint switching frequency (f_p_s) of the pulse-width modulation with respect to the electrical frequency (f_el) of the electric machine (270), the electrical frequency (f_el) is multiplied by a specifiable integer switching number (q).

3. Method (100) according to either of the preceding claims,
wherein the method (100) for controlling the electric machine (270) is carried out if the absolute value of the ascertained electrical frequency (f_el) of the electric machine (270) is greater than a first specifiable limit value (f_1) and/or wherein the method (100) for controlling the electric machine (270) is carried out if the absolute value of the ascertained electrical frequency (f_el) of the electric machine (270) is less than a second specifiable limit value (f_2).

4. Method according to Claim 3, wherein the method (100) for controlling an inverter (260) is carried out at the operating point of the overmodulation.

5. Method (100) according to Claim 3,
wherein, in order to control an inverter (260), a pulse-width-modulated space vector modulation is carried out with a specifiable switching frequency (f_v) if the absolute value of the ascertained electrical frequency (f_el) of the electric machine (270) is less than the first specifiable limit value (f_1), wherein the specifiable switching frequency (f_v) is in particular, at least partially, asynchronous with the electrical frequency (f_el).

6. Method (100) according to Claim 3,
wherein, in order to control an inverter (260), the block commutation synchronous with the electrical frequency is carried out if the absolute value of the ascertained electrical frequency (f_el) of the electric machine (270) is greater than the second specifiable limit value (f_2).

7. Device (200) for controlling an inverter (260),
wherein the device comprises a current control loop (280) with a voltage modulation (250),
**characterized in that** the device
comprises a first open-loop or closed-loop control loop (210) for ascertaining and specifying the setpoint switching frequency (f_p_s) synchronous with the electrical frequency (f_el),
and is configured to carry out a method according to one of Claims 1 to 6.

8. Drive train (300) having a device (200) according to Claim 7.

9. Vehicle (400) having a drive train (300) according to Claim 8.

10. Computer program, comprising commands which, upon the execution of the program by a computer, cause the device (200) according to Claim 7 to carry out the method (100) according to Claims 1 to 6.

11. Computer-readable storage medium, comprising commands which, upon the execution by a computer, cause the device (200) according to Claim 7 to carry out the method (100) according to Claims 1 to 6.

## Revendications

1. Procédé (100) de commande d'un onduleur (260),
l'onduleur (260) convertissant, pour alimenter une machine électrique (270), une tension continue en une tension alternative polyphasée, comprenant les étapes consistant à :
déterminer (120) une fréquence électrique (f_el) de la machine électrique (270) ;
déterminer (130) une fréquence de commutation de consigne (f_p_s) pour une modulation de largeur d'impulsion,
la fréquence de commutation de consigne (f_p_s) étant synchrone de la fréquence électrique (f_el) déterminée de la machine électrique ;
commander (150) l'onduleur (260) par modulation de largeur d'impulsion à la fréquence de commutation de consigne (f_p_s) déterminée,
**caractérisé par** les étapes supplémentaires suivantes consistant, lors d'un passage de la modulation de largeur d'impulsion à la commutation par blocs ou inversement, à :
prédéfinir (140) un angle de départ de consigne (alpha_s) d'un premier vecteur de tension de la modulation de largeur d'impulsion par rapport à l'axe alpha fixe par rapport au stator, ou par rapport à l'un des vecteurs de tension de base,
l'angle de départ de consigne (alpha_s) étant prédéfini en fonction de prédé-finitions de points de fonctionnement et étant notamment égal à 0° ou 30°, et commander (150) l'onduleur (260) par modulation de largeur d'impulsion à la fréquence de commutation de consigne (f_p_s) déterminée et avec l'angle de départ de consigne prédéfini (alpha_s).

2. Procédé (100) selon la revendication 1,
dans lequel, dans lequel, pour déterminer la fréquence de commutation de consigne (f_p_s) synchrone de la modulation de largeur d'impulsion à la fréquence électrique (f_el) de la machine électrique (270), la fréquence électrique (f_el) est multipliée par un nombre de commutations entier (q) pouvant être prédéfini.

3. Procédé (100) selon l'une des revendications précédentes,
dans lequel le procédé (100) de commande de la machine électrique (270) est mis en œuvre lorsque la valeur absolue de la fréquence électrique (f_el) déterminée de la machine électrique (270) est supérieure à une première valeur limite prédéfinissable (f_1) et/ou dans lequel le procédé (100) de commande de la machine électrique (270) est mis en œuvre lorsque la valeur absolue de la fréquence électrique (f_el) déterminée de la machine électrique (270) est inférieure à une seconde valeur limite prédéfinissable (f_2).

4. Procédé selon la revendication 3, dans lequel le procédé (100) de commande d'un onduleur (260) est mis en œuvre au point de fonctionnement de la surmodulation.

5. Procédé (100) selon la revendication 3,
dans lequel, pour commander un onduleur (260), une modulation vectorielle par largeur d'impulsion est mise en œuvre avec une fréquence de commutation prédéfinissable (f_v) lorsque la valeur absolue de la fréquence électrique (f_el) déterminée de la machine électrique (270) est inférieure à la première valeur limite prédéfinissable (f_1), la fréquence de commutation prédéfinissable (f_v) étant notamment, au moins en partie, asynchrone par rapport à la fréquence électrique (f_el).

6. Procédé (100) selon la revendication 3,
dans lequel, pour commander un onduleur (260), la commutation par blocs synchrone de la fréquence électrique est mise en œuvre lorsque la valeur absolue de la fréquence électrique déterminée (f_el) de la machine électrique (270) est supérieure à la seconde valeur limite prédéfinissable (f_2).

7. Dispositif (200) de commande d'un onduleur (260),
le dispositif comprenant une boucle de régulation de courant (280) avec une modulation de tension (250),
**caractérisé en ce que** le dispositif
comprend un premier circuit de commande ou de régulation (210) pour déterminer et prédéfinir la fréquence de commutation de consigne (f_p_s) synchrone de la fréquence électrique (f_el),
et conçu pour mettre en œuvre un procédé selon l'une des revendications 1 à 6.

8. Chaîne cinématique (300) comprenant un dispositif (200) selon la revendication 7.

9. Véhicule (400), comprenant une chaîne cinématique (300) selon la revendication 8.

10. Produit de programme informatique, comprenant des instructions qui, lors de l'exécution du programme par un ordinateur, amènent le dispositif (200) selon la revendication 7 à mettre en œuvre le procédé (100) selon les revendications 1 à 6.

11. Support de stockage lisible par ordinateur comprenant des instructions qui, lorsqu'elles sont exécutées par un ordinateur, amènent le dispositif (200) selon la revendication 7 à mettre en œuvre le procédé (100) selon les revendications 1 à 6.
